# EUROPEAN PATENT APPLICATION

(11) **EP 2 299 557 A2**
(43) Date of publication of application: **23.03.2011**
(21) Application number: 10009593.4
(22) Date of filing: 14.09.2010
(51) Int. Cl.: H02J 9/00

(54) **Power supply cooperation system and uninterruptible power supply device**

(30) Priority: 18.09.2009 JP 2009216572
(71) Applicant: Renesas Electronics Corporation, Nakahara-ku Kawasaki Kanagawa 211-8668 (JP)
(72) Inventor: Okada, Norio, Kawasaki Kanagawa 211-8668 (JP)
(74) Representative: Glawe, Delfs, Moll

(57) **Abstract**

A UPS device is coupled to an external power source and another UPS device through a power line. The UPS device includes: a storage battery in which power from the external power source is charged, the UPS device being configured to be capable of supplying power charged in the first storage battery to the power line coupled to the UPS device; a communication unit that communicates with the another UPS device through the power line; and a determination unit that determines whether the power line is in normal condition or not based on whether a communication between the UPS device and the another UPS device has been successfully established or not. Power is supplied from the storage battery to the power line that has been determined to be in normal condition by the determination unit.

## Description

### INCORPORATION BY REFERENCE

This application is based upon and claims the benefit of priority from Japanese patent application No. 2009-216572, filed on September 18, 2009, the disclosure of which is incorporated herein in its entirety by reference.

### BACKGROUND

### 1. Field of the Invention

The present invention relates to a power supply cooperation system and an uninterruptible power supply device.

### 2. Description of Related Art

UPS (Uninterruptable Power Supply) devices have been widely known since past which supply power charged therein to computers and peripheral devices connected thereto when a failure in power supply, such as a blackout, or power outage, has happened.

Patent Document 1 (Japanese Unexamined Patent Application Publication No. 2000-236587), for example, discloses a plurality of UPS devices, a management computer connected to the UPS devices, and a terminal computer which is controlled by the management computer and is connected to the UPS devices. The plurality of UPS devices, the management computer, and the terminal computer are coupled with each other via electric cables, and thus communication can be established there-between.

The management computer is capable of controlling the startup/shutdown of the terminal computer, and is capable of monitoring the operating status of the UPS devices.

Patent Document 2 (Japanese Patent No. 3072644) discloses a UPS device that performs communication with an external communication device. The UPS device disclosed in patent document 2 has a main buttery, a backup power source, a serial communication unit, a wireless communication unit, and so on.

The UPS device is network-connected with an upper device through the serial communication unit, and is configured to be capable of communicating with a wireless terminal (remote) via the wireless communication unit.

When a failure in power supply from a commercial power source to the UPS device has happened, electric power is supplied from the main buttery to the serial communication unit, wireless communication unit, and so on, thereby the network communication and the wireless communication being kept active. Further, when the power charged in the main buttery has been exhausted, electric power is supplied from the backup power source to the wireless communication device, thereby the wireless communication being kept active.

Patent Document 3 (Japanese Unexamined Patent Application Publication No. 2005-253231) discloses a UPS device coupled to an information processing device and an electric power source that supplies power to various devices.

The UPS device and the information processing device are configured to be capable of communicating with one another through a network. Patent Document 3 discloses that the UPS device supplies power to the information processing device until the information processing device properly stops its information processing operation that is performed when power has not been supplied from a power source to the information processing device due to power outage and so on.

However, the technique disclosed in Patent Document 1 fails to provide a way to maintain the control over the startup/shutdown of the computer connected to the UPS device when the charged power has been exhausted in the UPS device.

The technique disclosed in Patent Document 2 also fails to provide a way to maintain power supply to the electric appliance connected to the UPS device when power has been exhausted in the main buttery and backup power source.

The technique disclosed in Patent Document 3 fails to consider a case where power charged in the UPS device has been exhausted. Furthermore, the technique disclosed in Patent Document 3 fails to provide a way to determine whether the information processing operation of the information processing device has been stopped correctly or not when a network failure had happened.

Additionally, the techniques disclosed in Patent Documents 1 and 3 fails to provide a way to detect a trouble, such as an electric leakage or a breakdown, of an electric appliance to which the UPS device is connected, when the electric appliance has no communication function.

### SUMMARY

The present inventor has found a problem that it has been difficult to mutually use power between the UPS devices and to prevent a power leak.

A first exemplary aspect of the present invention is a power cooperation system including: a distribution controller that supplies power from an external power source to a plurality of power lines; a first UPS device that is coupled to at least one of the plurality of power lines and comprises a first storage battery in which power from the external power source is charged, the first UPS device being configured to be capable of supplying the power charged in the first storage battery to the power line coupled to the first UPS device when a failure of a power supply from the external power source has happened; and a second UPS device that is coupled to at least one of the plurality of power lines and comprises a second storage battery in which power from the external power source is charged, the second UPS device being configured to be capable of supplying the power charged in the second storage battery to the power line coupled to the second UPS device when a failure of a power supply from the external power source has happened. Whether the power line is in normal condition or not is determined based on whether a communication between one of the first and second UPS devices and the distribution controller through the power line has been successfully established or not, and the distribution controller disconnects the power line when the power line has been determined to be not in normal condition.

A second exemplary aspect of the present invention is a UPS device that is coupled to an external power source and another UPS device through a power line, the UPS device including: a storage battery in which power from the external power source is charged, the UPS device being configured to be capable of supplying the power charged in the storage battery to the power line coupled to the UPS device; a communication unit that communicates with the another UPS device through the power line; and a determination unit that determines whether the power line is in normal condition or not based on whether a communication between the UPS device and the another UPS device has been successfully established or not. Power is supplied from the storage battery to the power line that has been determined to be in normal condition by the determination unit.

By adopting the above configurations, power may be mutually used between the UPS devices and a power leak may be prevented.

### BRIEF DESCRIPTION OF THE DRAWINGS

The above and other exemplary aspects, advantages and features will be more apparent from the following description of certain exemplary embodiments taken in conjunction with the accompanying drawings, in which:
Fig. 1 is a diagram showing an exemplary configuration of a power supply cooperation system according to a first exemplary embodiment of the present invention;
Figs. 2A to 2C are block diagrams showing exemplary UPS devices according to the first exemplary embodiment of the present invention;
Fig. 3 is a block diagram showing an exemplary electric power distribution controller according to the first exemplary embodiment of the present invention;
Fig. 4 is a flowchart showing an exemplary electric power supply cooperation method according to the first exemplary embodiment of the present invention;
Fig. 5 is a flowchart showing an exemplary electric power supply cooperation method according to the first exemplary embodiment of the present invention;
Fig. 6 is a flowchart showing an exemplary electric power supply cooperation method according to the first exemplary embodiment of the present invention; and
Fig. 7 is a flowchart showing an exemplary electric power supply cooperation method according to the first exemplary embodiment of the present invention.

### DETAILED DESCRIPTION OF THE EXEMPLARY EMBODIMENTS

### [First exemplary embodiment]

An exemplary embodiment of the present invention will be explained with reference to the accompanying drawings.

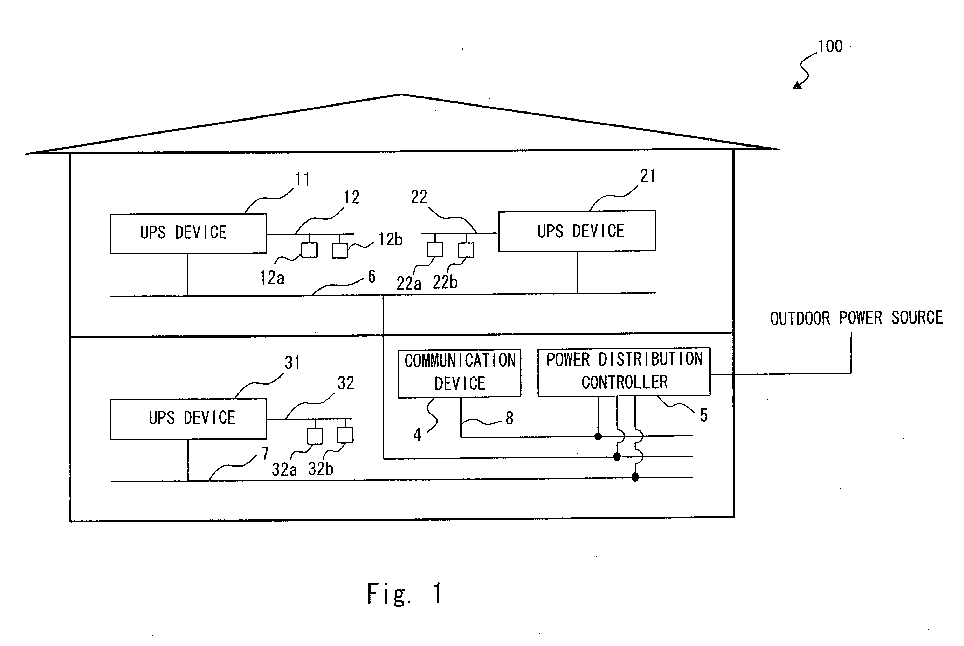

Fig. 1 is a diagram showing an exemplary configuration of a power supply cooperation system 100 according to the first exemplary embodiment of the present invention. As shown in Fig. 1, the power supply cooperation system 100 has UPS (Uninterruptible Power Supply) devices 11, 21, 31, a communication device 4, and a power distribution controller 5. The power cooperation system 100 is provided inside a house. In a normal state where no failure in power supply has happened, the power (electric power) is supplied from an outdoor power supply (external power source, external power supply system) to the power cooperation system 100.

Specifically, the outdoor power supply is connected with the power distribution controller 5. The UPS devices 11, 21, 31 are connected with the outdoor power supply through the power distribution controller 5. The power distribution controller 5 distributes the power from the outdoor power supply to the UPS devices 11, 21, 31.

The plurality of UPS devices 11, 21, 31, the communication device 4, and the power distribution controller 5 are connected via power lines. The power lines include normal power lines 6, 7, 8 and individual power lines 12, 22, 32.

As shown in Fig. 1, the normal power lines 6, 7, 8 are connected to the power distribution controller 5. The power from the outdoor power supply is supplied to the respective normal power lines 6, 7, 8 through the power distribution controller 5.

The normal power line 6 is connected to the UPS devices 11, 12. The power from the outdoor power supply is supplied to the UPS devices 11 and 21 through the normal power line 6. The normal power line 7 is connected to the UPS device 31. The power from the outdoor power supply is supplied to the UPS device 31 through the normal power line 7. The normal power line 8 is connected to the communication device 4. The power from the outdoor power supply is supplied to the communication device 4 through the normal power line 8.

The individual lines 12, 22, 32 are not directly connected to the power distribution controller 5, and therefore the power from the outdoor power supply is not directly supplied thereto. The individual power lines 12, 22, 32 are connected to the UPS devices 11, 21, 31 respectively. The power from the outdoor power supply is supplied to the individual power lines 12, 22, 32. The power charged in the UPS devices 11, 21, 31 is supplied to the individual power lines 12, 22, 32 respectively when a failure of power supply has happened.

The individual power line 12 is connected to electric appliances 12a, 12b, for example. The individual power line 22 is connected to electric appliances 22a, 22b, for example. The individual power line 32 is connected to electric appliances 32a, 32b, for example. Note that the number of electric appliances connected to the UPS device is arbitrary.

The individual power line 12 supplies the power from the outdoor power supply or the power charged therein to the electric appliances 12a, 12b. The individual power line 22 supplies the power from the outdoor power supply or the power charged therein to the electric appliances 22a, 22b. The individual power line 32 supplies the power from the outdoor power supply or the power charged therein to the electric appliances 32a, 32b.

As shown in Fig. 1, the UPS device 11, 21 and the power distribution controller 5 are connected via the normal power line 6. The UPS 31 and the power distribution controller 5 are connected via the normal power line 7. The communication device 4 and the power distribution controller 5 are connected via the normal power line 8. The UPS devices 11, 21 and the UPS device 31 are connected via the power distribution controller 5. The UPS devices 11, 21, 31 and the communication device 4 are connected via the power distribution controller 5.

The UPS device 11 is connected to the individual power line 12. The power from the outdoor power supply or the power charged in the UPS device 11 is supplied to the electric appliances 12a, 12b which are connected to the individual power line 12. In a similar way, the UPS device 21 is connected to the individual power line 22, and the UPS device 31 is connected to the individual power line 32. The power from the outdoor power supply or the power charged in the UPS device 21 is supplied to the electric appliances 22a, 22b that are connected to the individual power line 22. The power from the outdoor power supply or the power charged in the UPS device 31 is supplied to the electric appliances 31a, 31b that are connected to the individual power line 32.

The number of the UPS devices provided in the power cooperation system 100 is arbitrary and should not be limited to the exact number disclosed in Fig. 1. Same explanation holds true to the number of the communication devices provided in the power cooperation system 100. The connection relationship (connection manner) of the UPS devices 11, 21, 31, the communication device 4, and the power distribution controller 5 is arbitrary and should not be limited to that shown in Fig. 1 either.

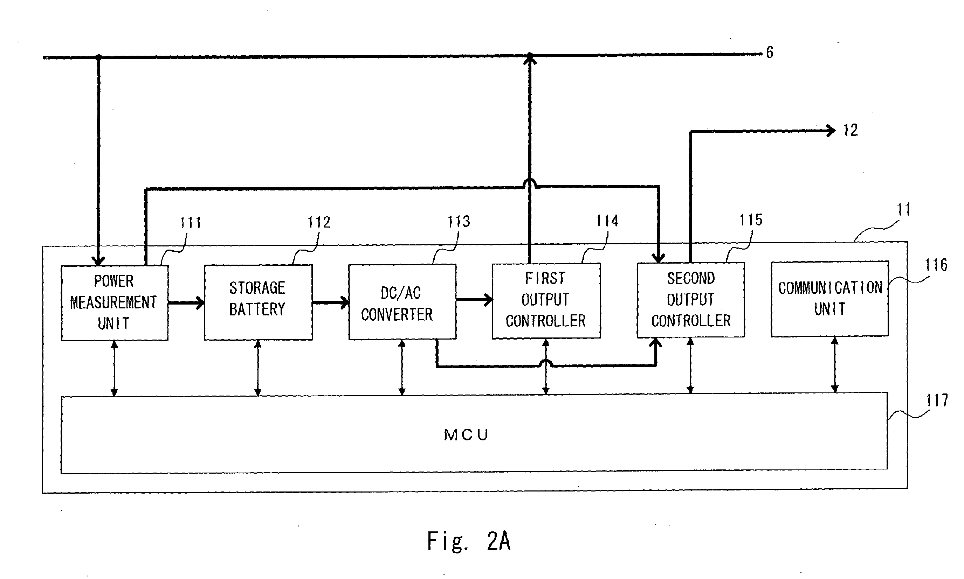

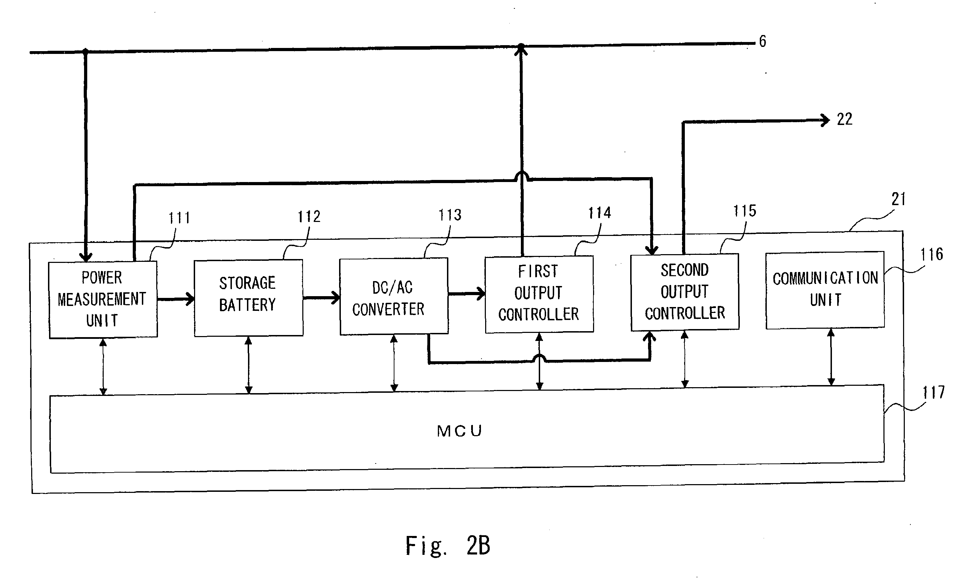

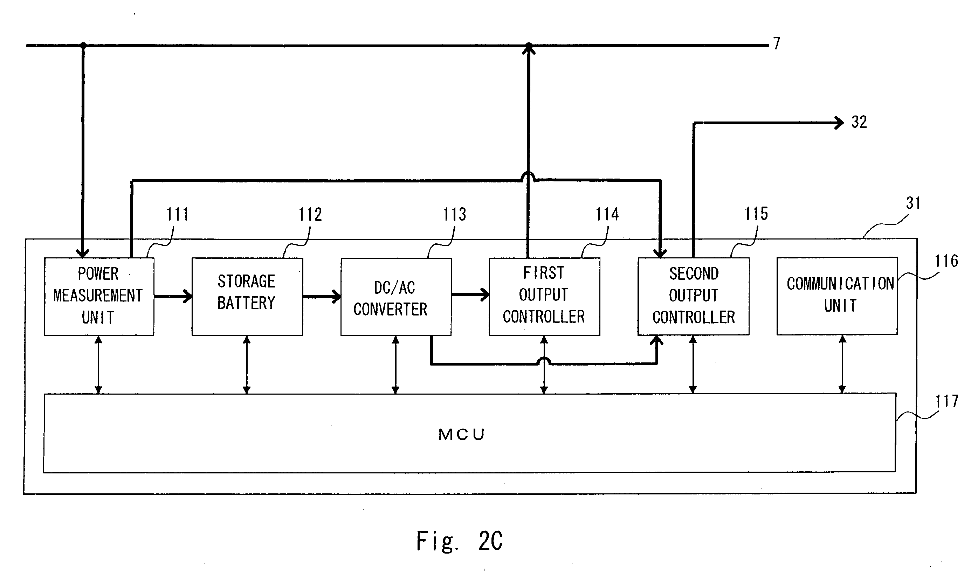

Figs. 2A to 2C are block diagrams showing exemplary configurations of the UPS devices 11, 21, 31 according to the first exemplary embodiment of the present embodiment. Specifically, Fig. 2A is a block diagram showing an exemplary configuration of the UPS device 11. Fig. 2B is a block diagram showing an exemplary configuration of the UPS device 21. Fig. 2C is a block diagram showing an exemplary configuration of the UPS device 31.

In the following explanations, the configuration of the UPS device 11 is mainly explained. Each configuration of the other UPS devices 21, 31 is substantially identical with the configuration of the UPS device 11, except for the connection relationship with respect to the normal and individual power lines. Therefore, undue explanation will be omitted.

As shown in Fig. 2A, the UPS device 11 has a power measurement unit 111 (Phase Detector), a storage battery (Battery Unit) 112, a DC/AC converter 113 (Converter), a first output controller 114 (Output Control Circuit, Switching Circuit), a second output controller 115 (Output Control Circuit, Switching Circuit), a communication unit 116 (First Communication Unit), and MCU (Micro Control Unit) 117. The MCU 117 may be explained as First Determination Means, Determination Means, or Calculation Means. The configurations of the UPS devices 21 and 31 are identical with the configuration of the UPS device 11, except for their connection relationship with the normal and individual power lines as stated above.

In a normal state, the outdoor power supply supplies its power to the normal power lines 6, 7, 8 via the power distribution controller 5. The normal power line 6 is connected to the respective electric power measurement units 111 of the UPS devices 11, 21. The normal power line 7 is connected to the power measurement unit 111 of the UPS device 31.

The power is supplied from the outdoor power supply to the second output controller 115 of the UPS device 11 via the power measurement unit 111. The power is supplied from the outdoor power supply to the individual power line 12 via the second output controller 115. The power is supplied from the outdoor power supply to the storage battery 112 of the UPS device 11 through the normal power line 6 and the power measurement unit 111.

The power measurement unit 111 measures magnitude/level of the power supplied thereto from the outdoor power supply through the normal power line 6. In particular, the power measurement unit 111 measures a voltage of the electric power that is being input through the normal power line 6. Then, the power measurement unit 111, for example, inputs an alarm signal to the MCU 117, when the detected voltage becomes equal to or below a predetermined voltage level (threshold voltage level).

The power measurement unit 111 detects a phase of the AC (Alternating Current) voltage being input from the outdoor power supply through the normal power line 6. Then, the electric power measurement 111 inputs phase information of the detected AC voltage to the MCU 117.

The storage battery 112 is equipped with a charge controller (not shown), a battery (not shown), a discharge controller (not shown) and so on, for example. The power supplied from the outdoor power supply to the storage battery 112 through the power measurement unit 111 is charged by the storage battery 112. In other words, the storage battery 112 charges the supplied power from the outdoor power supply in its battery.

More specifically, the charge controller controls a connection between the power measurement unit 111 and the battery. The charge controller is open until the storage amount of the battery reaches its full capacity, and becomes closed when the storage amount of the battery reaches its full capacity.

The discharge controller is provided at an output side of the battery. The discharge controller is normally closed, but becomes open when supplying the power charged in the UPS device 11 to the normal power line 6 and/or power line 12.

With such a configuration, the storage battery 112 is configured to charge power from the outdoor power supply in a normal state. The storage battery 112 inputs the information of an amount of charged energy to the MCU 117. The information of an amount of charged energy indicates an amount of energy charged in the storage battery 112.

The power charged in the storage battery 112 is supplied to the DC/AC converter 113. In particular, the direct current voltage is supplied from the storage battery 112 to the DC/AC converter 113. Then, the DC/AC converter 113 converts the DC (Direct Current) voltage, which is input from the storage battery 112, to AC (Alternating Current) voltage.

Phase information of the AC voltage of the outdoor power supply is detected by the power measurement unit 111, and the MCU 117 inputs the phase information to the DC/AC converter 113. The DC/AC converter 113 converts the direct current voltage to the AC voltage based on the input phase information such that the generated AC voltage has the same phase with the phase of the AC voltage of the outdoor power supply. Then, the DC/AC converter 113 supplies the AC voltage to the first and second output controllers 114, 115.

When stopping the power supply from the storage battery 112 to the normal power line 6 and the individual power line 12 after that the outdoor power supply has been recovered, the DC/AC converter 113 changes, in a step-by-step manner, the phase of the AC voltage supplied from the storage battery 112 to the normal power line 6 and the individual power line 12 such that the phase of the AC voltage supplied from the storage battery 112 to the normal power line 6 and the power line 12 conforms to the phase of the AC voltage of the outdoor power supply.

More specifically, the DC/AC converter 113 regulates the phase of the AC voltage, which is supplied from the storage battery 112 to the normal power line 6 and the individual power line 12 by a frequency equal to or below 6 Hz until the phase of the AC voltage conforms to the phase of the outdoor power supply. The DC/AC converter 113 inputs the phase information of the regulated AC voltage to the MCU 117 successively.

The AC voltage regulated by the DC/AC converter 113 is input to the first output controller 114. The first output controller 114 is connected with the normal power line 6. The first output controller 114 controls the supply of the AC voltage to the power line 6 in accordance with a control signal input from the MCU 117.

More specifically, the first output controller 114 is equipped with a relay circuit or a triac device and so on, and connects or disconnects between the DC/AC converter 113 and the normal power line 6 in accordance with an ON/OFF signal input from the MCU 117. In other words, the first output controller 114 functions as a switching circuit that turns ON or turns OFF in accordance with the control signal supplied from the MCU 117. When its switching condition is ON, the power is supplied from the DC/AC converter 113 to the normal power line 6. If not, the power is not supplied from the DC/AC converter 113 to the normal power line 6.

The first output controller 114 may be configured from any arbitrary devices if it controls the supply of the AC voltage to the normal power line in accordance with a control signal input from the MCU, and should not be limited to the relay circuit or the triac device.

The first output controller 114 measures the voltage value of the AC voltage output to the normal power line 6. The first output controller 114 inputs the detected voltage value to the MCU 117. The first output controller 114 stops supplying supply the power charged in the storage battery 112 to the normal power line 6 in accordance with the control signal input from the MCU 117, when the measured voltage value becomes equal to or above a predetermined value.

The AC voltage regulated by the DC/AC converter 113 is input to the second output controller 115. The second output controller 115 is connected to the individual power line 12. The output control circuit 115 controls the supply of the AC voltage to the individual power line 12 in accordance with a control signal input from the MCU 117.

Similarly to the first output controller 114, the second output controller 115 is equipped with a relay circuit or a triac device and so on, and connects or disconnects between the DC/AC converter 113 and the individual power line 12 in accordance with an ON/OFF signal input from the MCU 117.

Similarly to the first output controller 114, the second output controller 115 may be configured from any arbitrary devices if it controls the supply of the AC voltage to the individual power line in accordance with a control signal input from the MCU, and should not be limited to the relay circuit or the triac device.

The second output controller 115 measures the voltage value of the AC voltage supplied to the individual power line 12. The second output controller 115 inputs the voltage value to the MCU 117. The second output controller 115 stops supplying the power charged in the storage battery 112 to the individual power line 12 in accordance with the control signal input from the MCU 117, when the measured voltage value becomes equal to or above a predetermined value.

The communication unit 116 communicates with the other UPS devices 21, 31 and the power distribution controller 5 in accordance with a control signal input from the MCU 117. For example, the communication unit 116 sends a check signal to the other UPS devices 21, 31 and the power distribution controller 5. The communication unit 116 sends back a confirmation signal to another UPS device upon receiving the check signal from another UPS device. The communication unit 116 receives the confirmation signal from another UPS device and the power distribution controller 5.

The MCU 117 is equipped with a CPU (Central Processing Unit), a ROM (Read Only Memory), a RAM (Random Access Memory), and so on. The CPU executes various programs stored in the ROM, and various data is stored across the RAM through processing the program, so that the units of the respective UPS devices 11, 21, 31 are controlled by the MCU 117. For example, the MCU 117 functions as various means such as first determination means, calculation means, and so on.

Above explanation holds true to the other UPS devices 21, 31. Thus, undue explanation is omitted here.

One master UPS device (first UPS device) is selected from the plural UPS devices 11, 21, 31 in the power supply cooperation system 100. In this embodiment, the following explanations are made on the assumption that the UPS device 11 has been selected as the master UPS device. The other UPS devices 21, 31 function as slave UPS devices.

As explained later, any of the UPS devices 11, 21, 31 has a chance to be the master UPS device. Therefore, the respective MCU 117 of each of the slave UPS devices 21, 31, which have not been selected as the master UPS device, includes the same configuration with the MCU 117 of the master UPS device 11. The MCU 117 of each of the slave UPS devices 21, 31 is configured to be capable of controlling each unit of the UPS devices 21, 31 so that the UPS devices 21, 31 may be able to function as the master UPS device.

Firstly, explanations are made on the MCU 117 of the UPS device 11 which has been selected as the master UPS device.

The MCU 117 of the master UPS device 11 controls the communication unit 116 of the master UPS device 11 to communicate with the UPS devices 21, 31 and the power distribution controller 5, when a failure in power supply has occurred in the power supply cooperation system 100.

More specifically, the MCU 117 controls the communication unit 116 to transmit the check signal to the other UPS devices 21, 31 and the power distribution controller 5. Next, the MCU 117 determines whether the normal power lines 6, 7 are in normal condition or not, based on whether the communication can be established with the other UPS devices 21, 31 and the power distribution controller 5.

More specifically, the MCU 117 determines whether communication can be established or not based on whether the communication unit 116 has received the confirmation signal from the other UPS devices 21, 31 and the power distribution controller 5.

The MCU 117 determines whether the normal power lines 6, 7 are in normal condition or not, based on whether the communication can be established with the other UPS devices 21, 31 and the power distribution controller 5. The MCU 117 controls the communication unit 116 to transmit the result of the determination to the other UPS devices 21, 31 and the power distribution controller 5.

Note that the MCU 117 also controls the communication unit 116 to transmit the check signal to the electric appliance which has a communication function and is connected to the individual power line 12. The MCU 117 determines whether communication can be established with the electric appliance or not based on whether the MCU 117 received the confirmation signal from the electric appliance or not. The MCU 117 determines whether the individual power line 12 is in normal condition or not based on whether communication with the electric appliance was established or not. Then, the MCU 117 determines whether the individual power line 12 is in normal condition or not based on whether communication with the electric appliance was established or not.

When the MCU 1117 determines that the individual power line 12 is not in normal condition, the MCU 117 outputs a control signal to the second output controller 115 in order to disconnect between the individual line 12 and the DC/AC converter 113. In particular, when the MCU 117 determines that the individual power line 12 is not in normal condition, the MCU 117 inputs an OFF signal to the second output controller 115, so that the second output controller 115 disconnects the output terminal of the DC/AC converter 113 from the individual power line 12.

Connection relationship of the UPS devices 11, 21, 31, the communication unit 4, the power distribution controller 5, and other electric appliances in the power supply cooperation system 100 has been memorized in the ROM or the like of the MCU 117. Therefore the MCU 117 is capable of determining which power line is in normal condition or not based on the communication result with the other UPS devices, the communication unit 4, the power distribution controller 5, and other electric appliances.

As for a case where power supply from the outdoor power supply has been stopped, electric power failure in the power supply cooperation system 100 may be cited. The MCU 117 determines whether the power supply from the outdoor power supply has stopped or not based on whether the alarm signal from the power measurement unit 111 has been input or not, for example.

The MCU 117 determines whether the value of the AC voltage which is input from the first output controller 114 becomes equal to or above a predetermined value or not. Note that the first output controller 114 measures the AC voltage that is to be supplied to the normal power line 6, and inputs the detected value of the AC voltage to the MCU 117.

The MCU 117 inputs a control signal to the first output controller 114 in order to stop the supply of the power charged in the storage battery 112 to the normal power line 6 when the MCU 117 determines that the voltage value has become equal to or above the predetermined value.

In the similar way, the MCU 117 determines whether the voltage value of the AC voltage input from the second output controller 115 becomes equal to or above a predetermined value. Note that the first output controller 115 measures the AC voltage that is to be supplied to the individual power line 12, and inputs the detected value of the AC voltage to the MCU 117. The MCU 117 inputs a control signal to the second output controller 115 in order to stop the supply of the power charged in the storage battery 112 or the power supplied from the outdoor power supply, to the individual power line 12 when the MCU 117 determines that the voltage value input from the second output controller 115 has become equal to or above the predetermined value.

The MCU 117 determines whether the amount of power charged in the storage battery 112 becomes equal to or lower than a predetermined amount, based on the information of an amount of charged energy input from the storage battery 112. The MCU 117 controls the communication unit 116, when it determines that the amount of power charged in the storage battery 112 becomes equal to or below the predetermined amount, to transmit a notification indicating that the amount of power charged in the storage battery 112 has become equal to or lower than the predetermined amount, to the other UPS devices 21, 31.

The MCU 117 calculates a power supply sustainable time based on the information of an amount of energy charged in the storage battery which is input from the storage battery 112. The MCU 117 determines whether this UPS device has become, in the power supply cooperation system 100, the last UPS device whose storage battery 112 has an amount of charge greater than the predetermined amount, in accordance with the notification indicating that the amount of power charged in the storage battery 112 has become equal to or lower than the predetermined amount transmitted from the UPS device 21 and/or UPS device 31.

When the MCU 117 determines that the UPS device in which this MCU 117 is embedded has become the last UPS device whose storage battery 112 has an amount of charge greater than the predetermined amount, the MCU 117 controls the communication unit 116 to transmit the calculated power supply sustainable time to the electric appliances which are employed in the power supply cooperation system 100, i.e. the electric appliances 12a, 12b.

The power is supplied from the outdoor power supply to the MCU 117 through the power measurement unit 111, though this feature is not shown in Fig. 2. The power is also supplied from the outdoor power supply to the communication unit 116 through the power measurement unit 111 and the MCU 117.

The MCU 117 of the UPS device 11 inputs the phase information of the supplied power from the outdoor power supply into the DC/AC converter 113, when the communication unit 116 receives from the power distribution controller 5 a notification indicating that power supply from the outdoor power supply has been recovered. Note that the phase information of the supplied power from the outdoor power supply is transmitted from the power distribution controller 5 together with the notification, and the MCU 117 inputs the received phase information to the DC/AC converter 113.

The MCU 117 determines whether the phase of the AC voltage supplied from the storage battery 112 to the normal power line 6 and the individual power line 12 matches the phase of the AC voltage of the outdoor power supply, based on the regulated phase information of the AC voltage input from the DC/AC converter 113.

When the phase of the AC voltage supplied from the storage battery 112 to the normal power line 6 and the individual power line 12 matches the phase of the AC voltage of the outdoor power supply, the MCU 117 controls the communication unit 116 to transmit an electric power supply start signal to the power distribution controller 5.

When the communication unit 116 has received a power supply stop signal from the power distribution controller 5, the MCU 117 controls the first output controller 114 to stop the power supply from the storage battery 112 to the normal power line 6 and the individual power line 12. At the same time, the MCU 117 transmits the power supply stop signal to the other UPS devices 21, 31.

Note that the power distribution controller 5 transmits the power supply stop signal to the UPS device 11 when the power distribution controller 5 connects the normal power lines with the outdoor power supply after that the distribution controller 5 has received the power supply start signal from the UPS device 11 (this feature will be explained below).

Next, explanations are given for the MCU 117 provided in each of the UPS devices 21, 31 that have not been set as the master UPS device.

In the UPS devices 21, 31 which have not been set as the master UPS device, the MCU 117 determines whether the communication unit 116 has received the check signal from the master UPS device 11 within a predetermined time period or not when a power failure had happened in the electric power cooperation system.

The MCU 117 controls the communication unit 116 to send back the confirmation signal (check signal reception signal, check signal confirmation signal) to the master UPS device 11, when the MCU 117 has determined that the communication unit 116 had received the check signal from the master UPS device 11 within a predetermined time period. Note that the communication between the master UPS device 11 and the slave UPS devices 21, 31 may be performed through the normal power line. The communication between the master UPS device 11 and the slave UPS devices 21, 31 may be performed wirelessly.

On the other hand, when the MCU 117 has determined that the communication unit 116 had not received the check signal from the master UPS device 11 within a predetermined time period, a reconfiguration process begins to replace the master UPS device in the power supply cooperation system 100. Through the reconfiguration process, one of the slave UPS devices 21, 31 will be the master UPS device.

More specifically, when the MCU 117 has determined that the communication unit 116 had not received the check signal from the master UPS device 11 within a predetermined time period, the MCU 117 controls the communication unit 116 to transmit the information of an amount of charged energy input from the storage battery 112 to the other UPS devices 21, 31.

Further, the MCU 117 determines which of the UPS devices 21, 31 has a greater amount of power charged in the storage battery 112 in the power cooperation system 100 by comparing the information of an amount of charged energy received from the other UPS device with the information of an amount of charged energy input from the storage battery 112 therein.

After the determination process, the MCU 117 of the UPS device that has the greatest amount of power charged in the storage battery 112 controls each unit of the said UPS device to function as the master UPS device. Thus, a much longer power supply time can be achieved, even after the original master UPS device 11 has become non-operative.

With respect to the UPS devices 21, 31, if the electric appliances having a communication function are connected to the individual power lines 22, 32 respectively as in the same manner as the UPS device 11, the MCU 11 7 controls the communication unit 116 to transmit the check signal to the electric appliances.

The MCU 117 determines whether communication with the electric appliance has been established or not, based on whether the MCU 117 has received the confirmation signal from the electric appliance. The MCU 117 determines whether the individual power line 22 or 32 is in normal condition or not, based on whether communication with the electric appliance has been established or not. Note that the communication between the UPS device and the electric appliance may be performed through the individual line. The communication between the UPS device and the electric appliance may be performed wirelessly.

When the MCU 117 determines that the individual power line 12 is not in normal condition, the control signal is input to the second output controller 11 to disconnect the individual power line 22 or 32 from the DC/AC converter 113. In particular, when the MCU 117 determines that the individual power line 12 is not in normal condition, the MCU 117 sends an OFF signal to the second output controller 115. In response to the input of the OFF signal from the MCU 117, the second output controller 115 disconnects the power supply connection between the DC/AC converter 113 and the individual power line 22 or 32.

As for a power failure in the power cooperation system 100, a case where power supply from the outdoor power supply has stopped may be cited as an example. In the UPS devices 21, 31, the MCU 117 determines whether the power supply from the outdoor power supply has stopped or not, based on whether the alarm signal from the power measurement unit 111 has been input or not, similarly with the UPS device 11.

In the UPS devices 21, 31, the MCU 117 determines whether the voltage value of the AC voltage which is input from the first output controller 114 becomes equal to or above a predetermined value or not. Note that the first output controller 114 measures the voltage value of the AC voltage output to the normal power line 6.

When the MCU 117 determines that the said voltage value has become equal to or above the predetermined value, the MCU 117 transmits the control signal to the first output controller 114 in order to stop the electric power supply from the storage battery 112 to the normal power line 6 or 7.

In a similar manner, the MCU 117 determines whether the voltage value of the AC voltage which is input from the second output controller 115 becomes equal to or above a predetermined value or not. Note that the second output controller 115 measures the AC voltage output to the individual power line 22 or 32.

When the MCU 117 determines that the said voltage value has become equal to or above the predetermined value, the MCU 117 transmits the control signal to the second output controller 115 in order to stop the power supply from the storage battery 112 to the individual power line 22 or 32.

Similarly to the UPS device 11, the MCU 117 of the UPS device 21 or 31 determines whether the amount of power charged in the storage battery 112 has become equal to or lower than a predetermined amount or not, based on the information of an amount of charged energy input from the storage battery 112. The MCU 117 controls the communication unit 116, when it determines that the amount of power charged in the storage battery 112 has become equal to or below the predetermined amount, to notify the other UPS devices 21, 31 that the amount of power charged in the storage battery 112 has become equal to or lower than the predetermined amount.

The MCU 117 calculates a power supply sustainable time based on the information of an amount of charged energy input from the storage battery 112. The MCU 117 determines whether, in the power supply cooperation system 100, this UPS device is the last UPS device whose storage battery 112 has a greater charged amount than the predetermined amount, in accordance with the notification transmitted from the other UPS devices 21 and/or 31 which notifies that its amount of power charged in the storage battery 112 had become equal to or lower than the predetermined amount.

The MCU 117 of the UPS device 21 or 31 controls the communication unit 116, when the MCU 117 has determined that the UPS device to which this MCU 117 is embedded is the last UPS device whose storage battery 112 has a greater charged amount than the predetermined amount, to transmit the calculated power supply sustainable time to the electric appliances which are employed in the power supply cooperation system 100.

Similarly to the UPS device 11, the electric power of the outdoor power supply is supplied to the MCU 117 through the power measurement unit 111 in the UPS devices 21, 31. The electric power of the outdoor power supply is supplied to the communication unit 116 through the power measurement unit 111 and the MCU 117.

When the communication unit 116 of the UPS device 21 or 31 receives the power supply stop signal from the master UPS device 11, the MCU 117 of the UPS device 21 or 31 controls the first output controller 114 to stop the power supply from the storage battery 112 to the normal power line 6 or 7.

The communication device 4 is connected to the normal power line 8 to which the UPS devices 11, 21, 31 are not connected. The communication device 4 is connected with the power distribution controller 5 through the normal power line 8. The communication device 4 communicates with the power distribution controller 5 through the normal power line 8.

For example, the communication device 4 receives a check signal transferred from the power distribution controller 5 through the normal power line 8, and sends back the confirmation signal to the power distribution controller 5 through the normal power line 8.

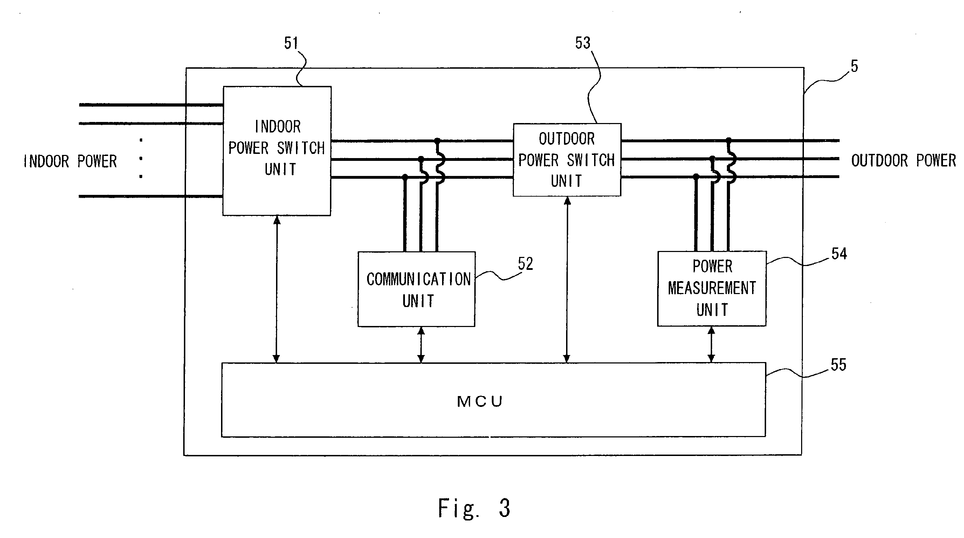

Fig. 3 is a block diagram showing one example of the power distribution controller 5. As shown in Fig. 3, the power distribution controller 5 includes an indoor power switch unit 51, a communication unit 52 (second communication unit), an outdoor power switch unit 53 (power disconnecting unit; power discontinuation unit), a power measurement unit 54, and a MCU 55 (second determination means). The power distribution controller 5 is configured by a distribution board or a distribution switchboard, for example.

The indoor power switch unit 51 is connected to the indoor power lines. The power lines connected to the indoor power switch unit 51 include the normal power lines 6, 7, 8. The outdoor power supply supplies its electric power to the indoor power switch unit 51 through the outdoor power switch unit 53. The indoor power switch unit 51 controls connection/disconnection between respective indoor power lines in accordance with the control signal input from the MCU 55. The indoor power switch unit 51 also controls the power supply from the outdoor power supply to the indoor power line. In other words, the indoor power switch unit 51 disconnects one or more of the indoor power lines from the outdoor power supply in accordance with the control signal supplied from the MCU 55.

The communication unit 52 is connected to the power line that is connected between the outdoor electric power switch 51 and the indoor electric power switch 53. The communication unit 52 communicates with the UPS devices 11, 21, 31 and the communication device 4 through the power line. For example, the communication unit 52 transmits the confirmation signal to the master UPS device through the power line when receiving the check signal transmitted from the master UPS device. The communication unit 52 transmits the check signal to the communication device 4 through the power line when receiving the check signal from the master UPS device 11. Further, the communication unit 52 receives the confirmation signal transmitted from the communication device 4. Note that the communication device 4 sends back the confirmation signal 4 in response to the received check signal.

The communication unit 52 transmits a notification indicating the recovery of the electric power of the outdoor power supply to the master UPS device 11 in accordance with a control signal input from the MCU 55. At the same time, the communication unit 52 continuously transmits the phase information of the electric power of the outdoor power supply to the master UPS device 11. For example, the communication unit 52 transmits the phase information to the master UPS device 11 each time the AC voltage of the outdoor power supply shows a rising edge in which the upper edge of the rising edge is equal to 0 V.

The communication unit 52 transmits the power supply stop signal to the UPS device 11 in accordance with a control signal input from the MCU 55 after receiving the power supply start signal from the UPS device 11.

The outdoor power switch unit 53 is connected between the outdoor power supply and the indoor power switch unit 51. The outdoor power switch unit 53 controls the connection/disconnection between the outdoor power supply and the indoor power lines in accordance with the control signal input from the MCU 55. For example, the outdoor power switch unit 53 disconnects the power supply connection between the outdoor power supply and the indoor power lines when the electric power supply from the outdoor power supply has been stopped. Thus, the outdoor power switch unit 53 prevents the electric power within the power cooperation system 100 from flowing out from the power cooperation system 100.

The power measurement unit 54 is connected to the power lines that are connected between the outdoor power supply and the indoor electric power switch 53. The power measurement unit 54 measures the electric power of the outdoor power supply. In particular, the power measurement unit 54 measures a voltage value of power input from the outdoor power supply. The power measurement unit 54, for example, inputs an alarm signal to the MCU 55 when the measured voltage of the supplied power from the outdoor power supply becomes equal to or less than a predetermined voltage.

The power measurement unit 54 inputs to the MCU 55 a signal indicating that the electric power of the outdoor power supply has been recovered when the measured voltage of the outdoor power supply exceeds the predetermined voltage.

The MCU 55 is equipped with a CPU (not shown), a ROM (not shown), a RAM (not shown), and so on. The CPU of the MCU 55 executes various programs stored in the ROM and stores data in the RAM through processing the program, so that the MCU 55 controls each unit of the power distribution controller 5. For example, the MCU 55 functions as the second determination means and so on.

More specifically, the MCU 55 controls the communication unit 52 to communicate with the communication device 4, when receiving the check signal from the master UPS device or when the power supply from the outdoor power supply has stopped. Note that the check signal is sent from the master UPS device. The UPS device 11 has been set as the master UPS device, but the other UPS devices 21, 31 may become the master UPS device as explained above. The MCU 55 controls the communication unit 52 to transmit the check signal to the communication device 4. The MCU 55 determines whether the normal power line 8 is in normal condition or not based on whether communication with the communication device 4 has been established or not. The MCU 55 determines whether the communication has been established or not based on whether the communication unit 52 has received the confirmation signal from the communication device 4 or not.

The MCU 55 determines whether the power supply from the outdoor power supply has stopped or not, based on whether the alarm signal output from the power measurement unit 54 has been input thereto or not. When the MCU 55 determines that the power supply from the outdoor power supply has stopped, a control signal is input to the outdoor power switch unit 53 in order to disconnect the outdoor power supply from the indoor power lines.

If there is a power line to which an electric appliance having a communication function is connected and from which any one of the UPS devices 11, 21, 31 and the communication device 4 is disconnected, the MCU 55 controls the communication unit 52 to transmit the check signal also to the said electric appliance. The MCU 55 also determines whether the MCU 55 can communicate with the said electric appliance based on whether the MCU 55 has received the confirmation signal from the said electric appliance. The MCU 55 determines whether the said power line is in normal condition or not based on whether the communication with the said electric appliance has been established or not. When the MCU 55 determines that the said power line is not in normal condition, the MCU 55 inputs a control signal to the outdoor electric power switch 51 to disconnect between the said power line and the outdoor power supply.

The MCU 55 of the power distribution controller 5 controls the outdoor power switch unit 53 to recover the connection between the indoor power lines and the outdoor power supply after receiving, from the power measurement unit 54, a signal indicating that the outdoor power supply has recovered. More specifically, the MCU 55 controls the communication unit 52 to transmit to the master UPS device 11 the notification indicating that the outdoor power supply has recovered when the outdoor power supply has recovered. At the same time, the MCU 55 controls the communication unit 52 to continuously transmit the phase information of the supplied power from the outdoor power supply to the UPS device 11. When the MCU 55 receives the power supply start signal from the UPS device 11 after a while, the MCU 55 controls the outdoor power switch unit 53 to recover the connection between the indoor power lines and the outdoor power supply, and controls the communication unit 52 to transmit the power supply stop signal to the UPS device 11.

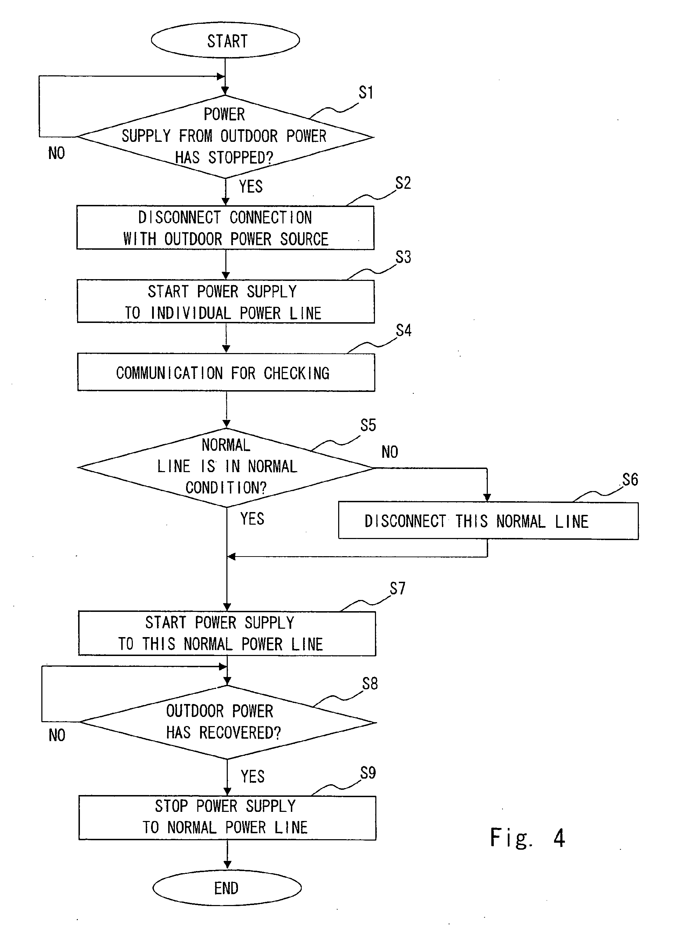

Hereinafter a power cooperation method in the power cooperation system 100 according to the first exemplary embodiment of the present invention will be explained with reference to the flowchart shown in Fig. 4.

First, the MCU 55 of the power distribution controller 5 determines whether the power supply from the outdoor power supply has stopped or not, based on whether the alarm signal is input from the power measurement unit 54 or not (Step S1). In a similar manner, the MCU 117 of each of the UPS devices 11, 21, 31 determines whether a power supply failure has happened in the power cooperation system 100 or not based on whether the alarm signal has been input thereto from its power measurement unit 111.

In step S1, when the MCU 55 of the power distribution controller 5 determines that the electric power supply failure has not happened, the flow goes back to the start position (Step S1; NO).

In step S1, when the MCU 55 of the power distribution controller 5 determines that the electric power supply failure has happened (Step S1; YES), the MCU 55 inputs the control signal to the outdoor power switch unit 53 in order to disconnect the outdoor power supply from the indoor power lines. The outdoor power switch unit 53 receives the control signal, and then disconnects the outdoor power supply from the indoor power lines (Step S2).

In step S1, when the MCU 117 of the UPS device 11, 21, or 31 determines that the power supply failure has happened in the power cooperation system 100 (Step S1; YES), the UPS device 11, 21, or 31 starts to supply its power charged in their storage battery 112 to the individual power line connected thereto (Step S3).

Next, the MCU 117 of the master UPS device 11 controls the communication unit 116 to perform checking (Step S4). More specifically, the MCU 117 of the UPS device 11 controls the communication unit 116 to transmit the check signal to the other UPS devices 21, 31 and the power distribution controller 5. The MCU 55 of the power distribution controller 5 controls the communication unit 52 to transmit the check signal to the communication device 4 at the substantially same time.

Next, the MCU 117 of the UPS device 11 determines whether the normal power lines 6, 7 are in normal condition or not based on whether the communication with the other UPS devices 21, 31 and the power distribution controller 5 has been successfully established or not (Step S5). More specifically, the MCU 117 determines whether the communication has been successfully established or not based on whether the communication unit 116 has received the confirmation signal from the other UPS devices 21, 31 and the power distribution controller 5. Then, the MCU 117 determines whether the normal power lines 6, 7 are in normal condition or not based on whether the communication with the other UPS devices 21, 31 and the other power distribution controller 5 has been successfully established or not.

At the same time, the MCU 55 of the power distribution controller 5 determines whether the normal power line 8 is in normal condition or not based on whether the communication between the power distribution controller 5 and the communication device 4 has been successfully established or not. More specifically, the MCU 55 determines whether the communication has been successfully established or not based on whether the communication unit 52 has received the confirmation signal from the communication device 4. Then, the MCU 55 determines whether the normal power line 8 is in normal condition or not based on whether the communication with the communication device 4 has been successfully established or not.

In step S5, when the MCU 117 of the UPS device 111 determines that the normal power lines 6, 7 are not in normal condition (Step S5; No), its determination result is input to the power distribution controller 5 and other UPS devices 21, 31. Then, the power distribution controller 5 having received the determination result controls the outdoor electric power switch 51 to disconnect the normal power lines 6, 7 from the outdoor power supply (Step S6), and the flow goes to the next step S7.

When the MCU 55 of the power distribution controller 5 determines that the normal power line 8 is not in normal condition, the MCU 55 controls the outdoor electric power switch 51 to disconnect the normal power line 8 from the outdoor power supply. Note that the power distribution controller 5 disconnects only the normal power line that has been determined to be not in normal condition among the normal power lines 6, 7, 8.

In step S5, the MCU 117 of the UPS device 11 input its determination result to the power distribution controller 5 and the other UPS devices 21, 31 when the MCU 117 determines that the normal power lines 6, 7 are in normal condition (Step S5; YES). Then, the UPS device starts to supply the power charged in the corresponding storage battery 112 to the normal line 6 or 7 (Step S7). At this time, the normal power lines 6, 7 are not disconnected in the power distribution controller 5 based on the determination result. Therefore, the power from the UPS devices 11, 21, 31 to the normal lines 6, 7 is supplied to the power distribution controller 5, the normal line 8, and the communication device 4 in this order.

Next, the MCU 55 of the power distribution controller 5 determines whether the outdoor power supply has recovered or not based on whether a signal indicating that the outdoor power supply has recovered from the power measurement unit 54 has been input or not (Step S8).

In step S8, when the MCU 55 of the power distribution controller 5 determines that the outdoor power supply has not recovered (Step S8; NO), the step S8 will be repeated.

In step S8, when the MCU 55 of the power distribution controller 5 determines that the outdoor power supply has recovered (Step S8; YES), the MCU 117 of each of the UPS devices 11, 21, 31 controls the corresponding first output controller 114 to stop the power supply from the storage battery 112 to the normal power lines 6, 7 and the individual power lines 12, 22, 32 (Step S9).

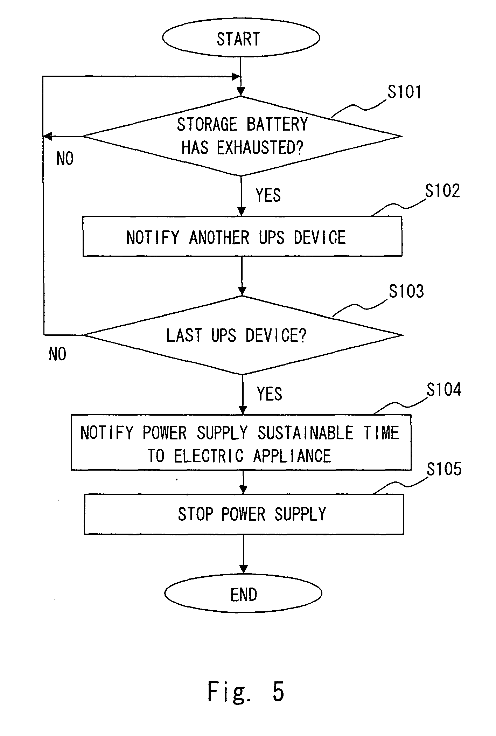

Next, explanations will be made with reference to the flowchart shown in Fig. 5. In the following case, it is assumed that the amount of power charged in the storage battery 112 of one of the UPS devices 11, 21, 31 has been exhausted.

Firstly, the MCU 117 of each of the respective UPS devices 11, 21, 31 determines whether the amount of power charged in the storage battery 112 becomes equal to or below the predetermined amount based on the accumulation information input from the storage battery 112 (Step S101).

In step S101, when the MCU 117 of each of the respective UPS devices 11, 21, 31 determines that the amount of power charged in the storage battery 112 is not equal to or below the predetermined amount (Step S101; NO), the flow will go back to the start position.

In step S101, when the MCU 117 of one of the UPS devices 11, 21, 31 determines that the amount of power charged in the storage battery 112 is equal to or below the predetermined amount (Step S101; YES), the MCU 117 of the UPS device controls the corresponding communication unit 116 to transmit to other UPS devices a notification indicating that the amount of power charged in the storage battery 112 has become equal to or below the predetermined amount (Step S102). Then, the UPS device whose storage battery 112 has been exhausted stops its power supply to the power lines connected thereto.

Next, the MCU 117 of each of the other UPS devices whose storage battery 112 has a greater amount of power charged in the storage battery 112 than the predetermined amount determines whether this UPS device is the last UPS device whose storage battery has a greater amount of power charged in the storage battery 112 than the predetermined amount based on the notification input from the other UPS devices (Step S103).

In step S103, when the MCU 117 determines that this UPS device is the last UPS device whose storage battery 112 has a greater amount of power charged in the storage battery 112 than the predetermined amount (Step S103; No), the flow will go back to Step S101.

In step S103, the MCU 117 determines that this UPS device is the last UPS device whose storage battery 112 has a greater amount of power charged in the storage battery 112 than the predetermined amount (Step S103; YES), the MCU 117 calculates the electric power supply sustainable time based on the amount of power charged in the storage battery 112 input from the storage battery 112. Then, the MCU 117 controls the communication unit 116 to transmit the calculated electric power supply sustainable time to the electric appliances provided in the power cooperation system 100 (Step S104).

Note that the predetermined amount satisfies enough electric power to stop the operation of the electric appliances provided in the power cooperation system 100, and the electric power supply time may be equal to or above one minute in light of a safety problem.

Next, the UPS device that is the last UPS device whose storage battery 112 has a greater amount of charged power than the predetermined amount stops its power supply to the power line when the power charged in the storage battery 112 has been exhausted (S105).

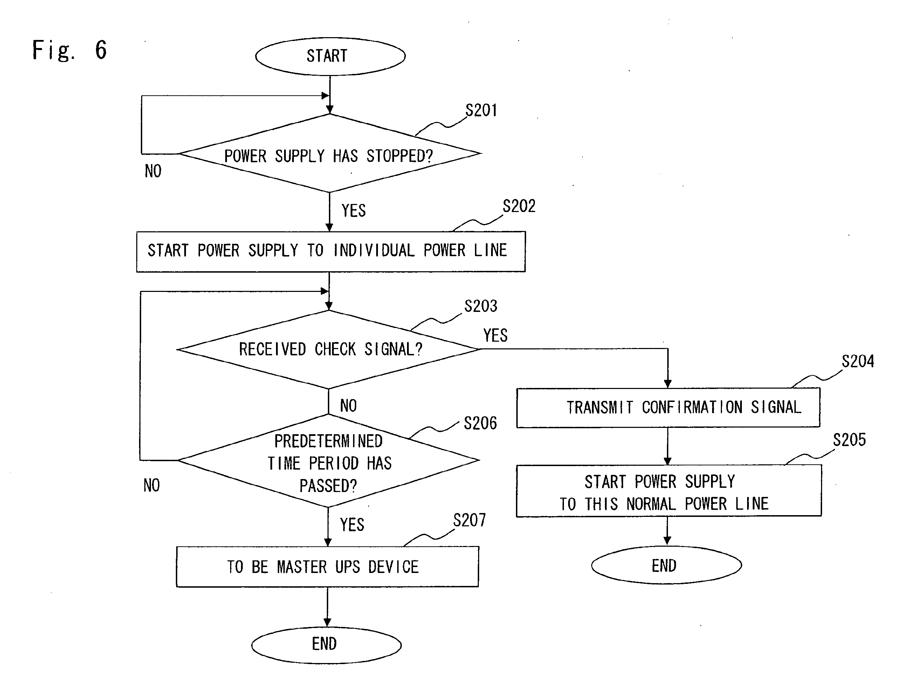

Next, explanations are made with reference to the flowchart shown in Fig. 6. In the following explanation, it is assumed that the master UPS device 11 has became non-operable in performing a communication function due to its internal trouble and so on.

Note that the steps S201, S202, and S205 are identical with the steps S1, S3, and S7 disclosed in Fig. 4, respectively, and thus overlapping explanations will be omitted.

Firstly, the MCU 117 of the UPS devices 21, 31 other than the master UPS device 11 determines whether the communication unit 116 has received the check signal from the master UPS device 11 (Step S203).

When the MCU 117 of the UPS devices 21, 31 determines that the communication unit 116 has received the check signal from the master UPS device 11 (Step S203; YES), the MCU 117 of the UPS devices 21, 31 controls the communication unit 116 to send back the confirmation signal to the master UPS device 11 (Step S204),.

In step S203, when the MCU 117 of each of the UPS devices 21, 31 determines that the communication unit 116 has not received the check signal from the master UPS device 11 (Step S203; NO), the MCU 117 determines whether a predetermined time has passed or not (Step S206).

In step S206, when the MCU 117 of each of the UPS device 21, 31 determines that the predetermined time has not passed yet (Step S206; NO), the flow will go back to the step S203.

In step S206, when the MCU 117 of each of the UPS devices 21, 31 determines that the predetermined time has passed (Step S206; YES), the MCU 117 performs control for setting one of the other UPS devices 21, 31 in the power cooperating system to function as the master UPS device (Step S207).

More specifically, when the MCU 117 determines that the MCU 117 has not received the check signal from the UPS device 11 within the predetermined time (Step S206; YES), the MCU 117 controls the communication unit 116 to transmit the information of an amount of charged energy input from the storage battery 112 to the other UPS devices. The MCU 117 determines which of the UPS devices has the greatest amount of power charged in the storage battery 112 based on the comparison between the information of an amount of charged energy input from the corresponding storage capacity 112 and the information of an amount of charged energy received from the other UPS devices. Then, the MCU 117 of the UPS device which has the greatest accumulated amount controls each unit of this UPS device to make this UPS device function as the master UPS device.

Note that this new master UPS device performs the steps S4 and S5 disclosed in Fig. 4. Through performing these steps, the normal power line 6 is determined to be not in normal condition when the communication with the UPS 11 has not been successfully established. After this, the normal power line 6 is disconnected by the power distribution controller 5, and thereby preventing the electric power from being supplied to the normal power line 6 from the UPS device.

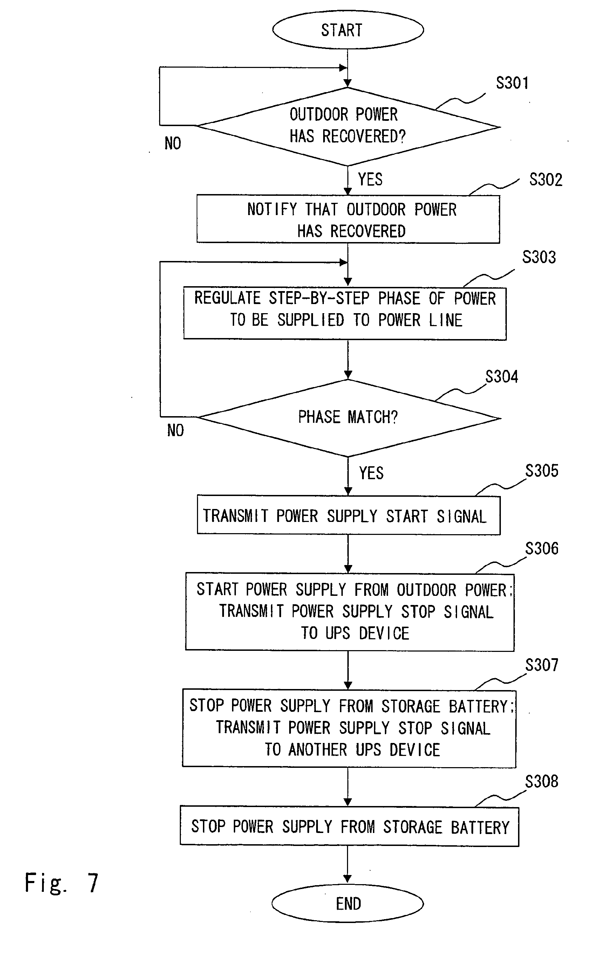

Next, explanations are made with reference to the flowchart shown in Fig. 7. In the following explanation, the power supply by the outdoor power supply has recovered, i.e. the steps S8 and S9 of Fig. 4, will be explained.

Firstly, the MCU 55 of the power distribution controller 5 determines whether the outdoor power supply has recovered or not based on whether or not the signal indicating that the outdoor power supply has recovered has been input thereto from the power measurement unit 54 (Step S301).

In step S301, when the MCU 55 determines that the outdoor power supply has not recovered yet (Step S301; NO), the flow will go back to the start position.

In step S301, when the MCU 55 determines that the outdoor power supply has recovered (Step S301; YES), the MCU 55 transmits to the master UPS device 11 a notification indicating that the outdoor power supply has recovered (Step S302). At the same time, the MCU 55 controls the communication unit 52 to continuously transmit the phase information of the supplied power from the outdoor power supply.

Next, the MCU 117 of the UPS device 11 input the phase information of the supplied power from the outdoor power supply which is input from the power distribution controller 5 to the DC/AC converter 113, and the phase of the AC voltage supplied from the storage battery 112 to the normal power line 6 and the individual power line 12 is regulated, in a stepwise manner, to be identical with the phase of the AC voltage of the outdoor power supply (Step S303).

Next, the MCU 117 determines, based on the regulated phase of the AC voltage input from the DC/AC converter 113, whether the phase of the AC voltage supplied from the storage battery 112 to the normal power line 6 and the individual power line 12 matches the phase of the AC voltage of the outdoor power supply (Step S304).

In step S304, when the MCU 117 determines that the phase of the AC voltage supplied from the storage battery 112 to the normal power line 6 and the individual power line 12 does not match the phase of the AC voltage of the outdoor power supply (Step S304; NO), the flow will go back to the step S303.

In step S304, when MCU 117 determines that the phase of the AC voltage supplied from the storage battery 112 to the normal power line 6 and the individual power line 12 matches the phase of the AC voltage of the outdoor power supply (Step S304; YES), the MCU 117 controls the communication unit 116 to transmit the power supply start signal to the power distribution controller 5 (Step S305).

Next, the MCU 55 controls the outdoor power switch unit 53 to recover the connection between the indoor power lines and the outdoor power supply, and controls the communication unit 52 to transmit the electric power supply stop signal to the UPS device 11 (Step S306).

Next, the MCU 117 of the UPS device 11 controls the first output controller 114 to stop the power supply from the storage battery 112 to the normal power line 6 and the individual power line 12. At the same time, the MCU 117 transmits the power supply stop signal to the other UPS devices 21, 31 (Step S307). Therefore, the power supply from the storage battery 112 to the normal power lines 6, 7 and the individual power lines 22, 32 are stopped also in the other UPS devices 21, 31.

As explained above, in the power cooperation system 100 according to the first exemplary embodiment of the present invention, when a power supply failure happens in the power cooperation system 100, the UPS devices 11, 21, 31 supply its power charged in the storage battery 112 to the normal power lines 6, 7 through which power is normally supplied from the outdoor power supply. Therefore, in the power cooperation system 100, the UPS devices 11, 21, 31 can mutually use the electric power charged in the corresponding storage battery 112.

In the power cooperation system 100, the UPS devices 11, 21, 31 and the power distribution controller 5 can perform communication through the normal power lines 6, 7. The MCU 117 of the master UPS 11 determines whether the normal power lines 6, 7 are in normal condition or not based on whether the communication has been successfully established between the master UPS device 11 and the UPS devices 21, 31, or between the master UPS device 11 and the power distribution controller 5. Then, the electric power distribution controller 5 disconnects the normal power lines 6, 7 that have been determined to be not in normal position by the UPS device 11. Therefore, even if the normal power lines 6, 7 or the electric appliances connected thereto have troubles such as an electric leak or malfunction, it becomes possible to prevent the power from being supplied the UPS device to the individual power line, and thus the electric leak is effectively suppressed.

Further, when the outdoor power switch unit 53 stops the electric power supply from the outdoor power supply, the outdoor power supply is disconnected from the power cooperation system 100. Thus, the electric power within the power cooperation system 100 is effectively prevented from leaking outside the power cooperation system 100.

The first output controller 114 controls the power supply from the storage battery 112 to the normal power line. The first output controller 114 disconnects the connection between the storage battery 112 and the normal power line when the voltage of the power supplied to the normal power line becomes equal to or above the predetermined value. Therefore, even if there is an electrical leak in the normal power line, the first output controller 114 prevents the power from leaking out from the storage battery 112 to the normal power line.

The UPS devices notify the other UPS devices by the communication unit 116 that the amount of power charged in the storage battery 112 becomes equal to or below the predetermined value. When there is only one UPS device whose storage battery 112 has the greatest amount of power charged in the storage battery 112 than the predetermined value, the UPS device transmits the power supply sustainable time calculated by the MCU 116 to the electric appliances provided in the power cooperation system 100 by the communication unit 116.

By adopting this configuration, the electric power supply sustainable time can be transmitted to the electric appliances provided in the power cooperation system 100 before every UPS device becomes incapable of transmitting information due to the shortage of the power charged in the storage battery 112. Therefore, each electric appliance can stop its operation in a safe manner before the power supply thereto stops.

When the power supply failure has happened in the power cooperation system 100, if the slave UPS devices have not received the check signal from the master UPS device within the predetermined time period, one of the slave UPS devices which has the greatest amount of power charged in the storage battery 112 replaces the master UPS device and starts to operate as the new master UPS device.

Even though the master UPS device, which has been set as the master UPS device initially, is incapable of transmitting the check signal due to a line break of the normal power line, one of the other UPS devices 21, 31 can operate as the master UPS device. Therefore, the slave UPS devices 21, 31 other than the master UPS device 11 can mutually use the power stored in the corresponding storage battery 112.

The UPS device whose storage battery 112 has the greatest amount of power charged in the storage battery 112 among the UPS devices in the power supply cooperation system operates as the master UPS device. Therefore, it is possible to prevent the power charged in the storage battery 112 of the new master UPS device from being exhausted shortly.

The DC/AC converter 113 converts the DC voltage input from the storage battery 112 such that the phase of the AC voltage to be output matches the phase of the AC voltage detected by the power measurement unit 111, and supplied the regulated AC voltage to the normal power line through which the electric power is supplied from the outdoor power supply to the UPS device. Thus, the phase of the power that is to be supplied from the UPS device to the normal power line can conform with the phase of the power that has been already supplied to the normal power line. Therefore, it is possible to prevent the substantial power supply amount from being decreased due to the mismatch between the phase of the power that has been already supplied to the normal power line and the phase of the power that is to be supplied from the UPS device to the normal power line.

The DC/AC converter 113 regulates in a stepwise manner the phase of the AC voltage supplied from the storage battery 112 to the normal power line such that the phas.e of the AC voltage supplied from the storage battery 112 to the normal power line matches the phase of the AC voltage of the outdoor power supply. The power distribution controller 5 connects the normal power line with the outdoor power supply when the phase of the AC voltage supplied from the storage battery 112 to the normal power line matches the phase of the AC voltage of the outdoor power supply.

The phase of the AC voltage supplied from the storage battery 112 to the normal power line changes in a stepwise manner. This effectively prevents the power from being substantially 0 (zero), because the phase before regulation and the phase after regulation balance with each other.

When the outdoor power supply has recovered and the power supply is switched from the storage battery 112 to the outdoor power supply, the phase of the AC voltage supplied from the storage battery 112 to the normal power line can be regulated to match the phase of the AC voltage of the outdoor power supply. Therefore, the amount of power supply can be effectively prevented from being temporarily lowered due to the phase mismatch between the phase of the AC voltage supplied from the storage battery 112 to the normal power line and the phase of the AC voltage of the outdoor power supply.

The MCU 55 of the power distribution controller 5 determines whether the normal power line 8 connecting the power distribution controller 5 with the communication device 4 is in normal condition or not based on whether the communication has been successfully established between the communication device 4 and the corresponding communication unit 52. The power distribution controller 5 disconnects the normal power line 8 when the MCU 55 has determined that the communication there-between has not been established.

Therefore, it becomes possible to check whether a failure such as a line break is occurring in the normal power line 8 which is not connected to any of the UPS devices and electric appliances having communication functions. If it is determined that there is a failure in the normal power line 8, the normal power line 8 is disconnected and the power supply from the storage battery 112 to the normal power line 8 through the power distribution controller 5 is effectively prevented.

The power distribution controller 5 may be configured by a distribution board, or a distribution electric power panel, and so on. In this case, if a human determines there is no problem from a safety stand point, the breaker may be changed to be ON even with respect to the power line that has been determined to be not in normal condition.

As apparent from above explanation, programs have been installed in each of the UPS devices, the power distribution controller, the communication device, and the electric appliances. The program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

While the invention has been described in terms of several exemplary embodiments, those skilled in the art will recognize that the invention can be practiced with various modifications within the spirit and scope of the appended claims and the invention is not limited to the examples described above.

Further, the scope of the claims should not be limited by the exemplary embodiments described above. Furthermore, it should be noted that, Applicant's intent is to encompass equivalents of all claim elements, even if amended later during prosecution.

## Claims

1. A power cooperation system comprising:
a distribution controller that supplies power from an external power source to a plurality of power lines;
a first UPS device that is coupled to at least one of the plurality of power lines and comprises a first storage battery in which power from the external power source is charged, the first UPS device being configured to be capable of supplying the power charged in the first storage battery to the power line coupled to the first UPS device when a failure of a power supply from the external power source has happened; and
a second UPS device that is coupled to at least one of the plurality of power lines and comprises a second storage battery in which power from the external power source is charged, the second UPS device being configured to be capable of supplying the power charged in the second storage battery to the power line coupled to the second UPS device when a failure of a power supply from the external power source has happened, wherein
whether the power line is in normal condition or not is determined based on whether a communication between one of the first and second UPS devices and the distribution controller through the power line has been successfully established or not, and the distribution controller disconnects the power line which has been determined to be not in normal condition.

2. The power cooperation system according to Claim 1, wherein the power distribution controller comprises a power disconnection unit that disconnects a connection with the external power source when the power supply from the external power source has stopped.

3. The power cooperation system according to one of Claims 1 and 2,
wherein
the first UPS device comprises a first output controller that controls a power supply of power charged in the first storage battery to the power line, and the first output controller disconnects a connection between the first storage battery and the power line when the power supplied from the storage battery to the power line becomes equal to or above a predetermined voltage.

4. The power cooperation system according to Claim 3, wherein
the second UPS device comprises a second output controller that controls a power supply of power charged in the second storage battery to the power line, and the second output controller disconnects a connection between the second storage battery and the power line when the power supplied from the storage battery to the power line becomes equal to or above a predetermined voltage.

5. The power cooperation system according to one of Claims 3 and 4,
wherein
the first UPS device further comprises a first calculation unit that calculates a power supply sustainable time based on an amount of power charged in the first storage battery, and notifies the second UPS device that the amount of power charged in the first storage battery has become equal to or below a predetermined value.

6. The power cooperation system according to Claim 5, wherein
the second UPS device further comprises a second calculation unit that calculates a power supply sustainable time based on an amount of power charged in the second storage battery, and notifies the first UPS device that the amount of power charged in the second storage battery has become equal to or below a predetermined value.

7. The power cooperation system according to Claim 6, wherein
the power supply sustainable time calculated by the first UPS device is transferred to an electric appliance provided in the power cooperation system after the second UPS device notifies the first UPS device that the amount of power charged in the second storage battery has become equal to or below the predetermined value.

8. The power cooperation system according to any one of Claims 1 to 7,
wherein
the first UPS device is configured to send a check signal to the second UPS device and the power distribution controller through the power line when a power supply failure of the external power source has happened.

9. The power cooperation system according to Claim 8, wherein
the second UPS device is configured to send back a confirmation signal to the first UPS device through the power line in response to the received check signal, and the power distribution controller is configured to send back a confirmation signal to the first UPS device through the power line in response to the received check signal.

10. The power cooperation system according to Claim 9, wherein
the first UPS device determines whether the power line is in normal condition or not based on whether the first UPS device has received the confirmation signal from the second UPS device or the power distribution controller or not.

11. The power cooperation system according to any one of Claims 8 to 10,
wherein
the second UPS device functions as a master UPS device when a power supply failure of the external power source has happened and the second UPS device has not received the check signal within a predetermined time period.

12. The power cooperation system according to Claim 11, further comprising:
a third UPS device that is coupled to at least one of the plurality of power lines and comprises a third storage battery in which power from the external power source is charged, the third UPS device being configured to be capable of supplying power charged in the third storage battery to the power line coupled to the third UPS device when a failure of the power supply from the external power source has happened, wherein
the second UPS device functions as the master UPS device when the second UPS device has not received the check signal from the first UPS device within the predetermined time period and the second UPS device has a greater amount of power charged in the second storage battery than the third UPS device, and
the third UPS device functions as the master UPS device when the third UPS device has not received the check signal from the first UPS device within the predetermined time period and the third UPS device has a greater amount of power charged in the third storage battery than the second UPS device.

13. The power cooperation system according to any one of Claims 1 to 12,
wherein
the first UPS device further comprises:
a phase detector that detects a phase of an AC voltage input from the external power source; and
a converter that converts a DC voltage supplied from the first storage battery to an AC voltage, wherein
the converter converts the DC voltage to the AC voltage such that the generated AC voltage has the same phase with the phase of an AC voltage detected by the phase detector, and supplies the generated AC voltage to the power line that is connected to the first UPS device.

14. The power cooperation system according to Claim 13, wherein
the converter converts the DC voltage to the AC voltage .in a stepwise manner such that the generated AC voltage has the same phase with the phase of an AC voltage of the external power source when the power supply from the external power source has recovered, and
the power distribution controller recovers a disconnection between the external power source and the power line when the phase of the AC voltage supplied from the first storage battery to the power line matches the phase of the AC voltage of the external power source.

15. The power cooperation system according to any one of Claims 1 to 14, further comprising:
a communication device that is coupled with the power distribution controller, wherein
the power distribution controller determines whether a power line between the power distribution controller and the communication device is in normal condition or not based on whether a communication between the power distribution controller and the communication device has been successfully established or not, and controls the connection or disconnection of the power line between the power distribution controller and the communication device based on said determination.

16. A UPS device that is coupled to an external power source and another UPS device through a power line, the UPS device comprising:
a storage battery in which power from the external power source is charged, the power charged in the storage battery being supplied from the storage battery to the power line that is coupled to the UPS device;
a communication unit that communicates with the another UPS device through the power line; and
a determination unit that determines whether the power line is in normal condition or not based on whether a communication between the UPS device and the another UPS device has been successfully established or not, wherein
power is supplied from the storage battery to the power line that has been determined to be in normal condition by the determination unit.

17. The UPS device according to Claim 16, further comprising:
an output controller that controls a power supply of power charged in the storage battery to the power line, wherein
the output controller disconnects a connection between the storage battery and the power line when the power supplied from the storage battery to the power line becomes equal to or above a predetermined voltage.

18. The UPS device according to Claim 17, further comprising:
a phase detector that detects a phase of an AC voltage input from the external power source; and
a converter that converts a DC voltage supplied from the storage battery to an AC voltage, wherein
the converter converts the DC voltage to the AC voltage such that the generated AC voltage has the same phase with the phase of an AC voltage detected by the phase detector, and supplies the generated AC voltage to the power line that is connected to the UPS device.

19. The UPS device according to Claim 18, wherein
the converter converts the DC voltage to the AC voltage in a stepwise manner such that the generated AC voltage has the same phase with the phase of an AC voltage of the external power source when the power supply from the external power source has recovered, and
the UPS device stops supplying the power charged in the storage battery to the power line when the phase of the power supplied from the storage battery to the power line matches the phase of the power supplied from the external power source.
